Europäisches Patentamt

European Patent Office

Office européen des brevets

(19)

(11) **EP 0 926 858 B1**

(12) **FASCICULE DE BREVET EUROPEEN**

| | |
|---|---|
| (45) Date de publication et mention de la délivrance du brevet:<br>**19.10.2005 Bulletin 2005/42** | (51) Int Cl.⁷: **H04L 7/02**, H04L 7/04, H04J 3/06 |

(21) Numéro de dépôt: **98403213.6**

(22) Date de dépôt: **18.12.1998**

(54) **Procédé de synchronisation d'un récepteur sur des données numériques transmises par paquets**

Verfahren zur Synchronisierung eines Empfängers auf digitale Paketdatensignale

Method for synchronizing a receiver on digital packet data

(84) Etats contractants désignés:
**DE GB IT**

(30) Priorité: **23.12.1997 FR 9716324**

(43) Date de publication de la demande:
**30.06.1999 Bulletin 1999/26**

(73) Titulaire: **SAGEM S.A.**
**75116 Paris (FR)**

(72) Inventeur: **Hamman, Emmanuel**
**75626 Paris Cédex 13 (FR)**

(74) Mandataire: **Bloch, Gérard**
**2, square de l'Avenue du Bois**
**75116 Paris (FR)**

(56) Documents cités:
**EP-A- 0 353 779**     **EP-A- 0 584 727**
**EP-A- 0 632 606**     **WO-A-91/07831**

- **SAMPEI S ET AL: "IMPROVEMENT OF DELAY SPREAD IMMUNITY BY USING SYMBOL TIMING SYNCHRONISATION BASED ON MAXIMUM LIKELIHOOD ESTIMATION FOR 16QAM/TDMA DIVERSITY RECEIVERS" ELECTRONICS LETTERS, vol. 29, no. 22, 28 octobre 1993, page 1917/1918 XP000420972**
- **FINA DE S: "SIMULTANEOUS FRAME AND BIT SYNCHRONIZATION OF HF RECEIVERS BY CONSTANT FALSE ALARM METHODS" EUROPEAN TRANSACTIONS ON TELECOMMUNICATIONS, vol. 7, no. 1, 1 janvier 1996, pages 83-91, XP000580351**

## Description

La transmission de données numériques à travers un réseau de communication s'effectue souvent par paquets. Lorsque le réseau est strictement transparent, il transmet le paquet comme s'il s'agissait d'un signal analogique, c'est-à-dire qu'il ne cale pas chaque période élémentaire de bit du paquet sur une éventuelle horloge du réseau. C'est par exemple le cas lorsqu'il s'agit de simples câbles, utilisés, par exemple, dans un réseau de diffusion à la demande de programmes de télévision, pour transmettre, à la station de tête, les requêtes des abonnés. Cette transmission peut s'effectuer en utilisant une trame temporelle selon la technique TDMA (Accès Multiple par Division de Temps) dans laquelle on affecte une voie temporelle à chaque utilisateur. Les transmissions peuvent aussi concerner des liaisons point-multipoint telles que du type LMDS (Système de Distribution Multipoint Local).

De ce fait, un récepteur doit, dans des circuits de commande d'échantillonnage, analyser d'abord la forme de tout signal reçu pour reconnaître qu'il s'agit d'un paquet et pour déterminer un instant précis auquel il faut commencer à échantillonner cycliquement le signal, au rythme déterminé de l'émission des bits et, plus généralement, de symboles. Il faut donc arriver à reproduire l'horloge ayant servi à l'émission des symboles reçus, et ceci avec un retard correspondant exactement à la transmission, afin, d'une part, d'effectuer une synchronisation logique pour restituer tous les symboles du paquet en repérant la position du premier, et uniquement ceux-ci, et, d'autre part, d'effectuer une synchronisation analogique, permettant de lire correctement chaque état logique de symbole reçu. La synchronisation analogique nécessite de caler en phase l'échantillonnage sur l'horloge d'émission, en tenant compte du délai de transmission, pour que chaque symbole, dont la réception a commencé, soit échantillonné avec un retard suffisant pour permettre sa stabilisation et ainsi le lire sans erreur. Evidemment, la synchronisation logique ne peut intervenir que si la synchronisation analogique est établie.

Il est ainsi connu de rechercher la synchronisation analogique, ou synchronisation sur le rythme des symboles, puis de rechercher ensuite la synchronisation logique, du paquet, d'après un préambule prédéterminé, pour repérer la position du premier symbole et donc celles des suivants d'après le rythme. Une telle synchronisation est décrite dans WO-A-91 07831. Cependant, si les paquets sont de faible longueur, leur préambule est aussi de longueur limitée afin d'éviter une perte proportionnellement excessive de temps de transmission, si bien qu'il subsiste un risque de défaut de synchronisation symbole et donc de non synchronisation logique.

La présente invention vise à réduire un tel risque de mauvaise synchronisation.

A cet effet, l'invention concerne un procédé de synchronisation d'un récepteur de signaux de données numériques transmis, à un rythme déterminé, par paquets de données précédées d'un préambule prédéterminé, dans lequel on effectue continûment un traitement de recherche de vraisemblance portant sur un bloc de signaux comportant le préambule et des données du reste du paquet, on mémorise les signaux reçus et, lorsqu'un maximum de vraisemblance est atteint, on lance un échantillonnage de lecture, au rythme déterminé, des signaux de données déjà reçus et mémorisés.

Ainsi, l'instant optimal pour échantillonner un premier symbole logique du paquet peut être déterminé avec une précision élevée puisque le maximum de vraisemblance est établi d'après une analyse débordant du seul préambule, pour s'étendre sur la zone de données proprement dites.

Avantageusement, on élabore un flux de valeurs de puissance des données de début de paquet et un flux de valeurs de corrélation entre le préambule prédéterminé et le préambule reçu, par un calcul continu des valeurs courantes considérées, et on retarde le flux de valeurs de corrélation pour l'additionner au flux de valeurs de puissance et ainsi obtenir une valeur de vraisemblance.

La présente invention sera mieux comprise à l'aide de la description suivante d'un mode de mise en oeuvre préféré du procédé de l'invention, en référence au dessin annexé, sur lequel :

- la figure 1 est un schéma par blocs d'un récepteur pour la mise en oeuvre du procédé de l'invention,

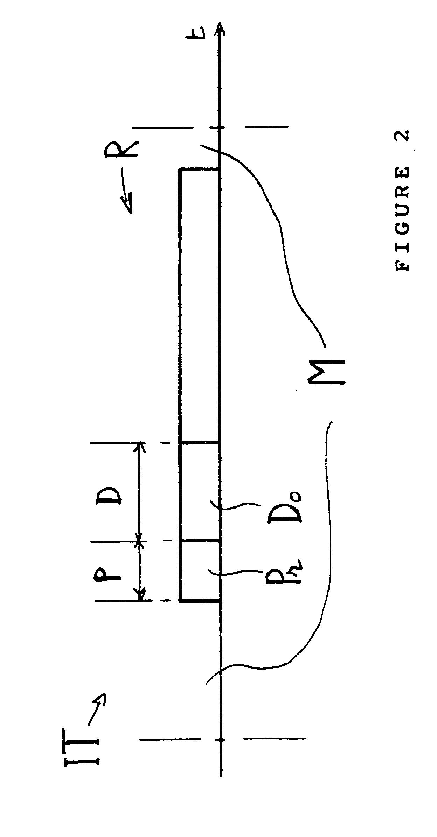

- la figure 2 représente, en fonction du temps t, un paquet de données dans un intervalle de temps d'une trame de transmission,
- la figure 3 illustre plus en détails, sous forme de blocs fonctionnels, un bloc de calcul de puissance, et

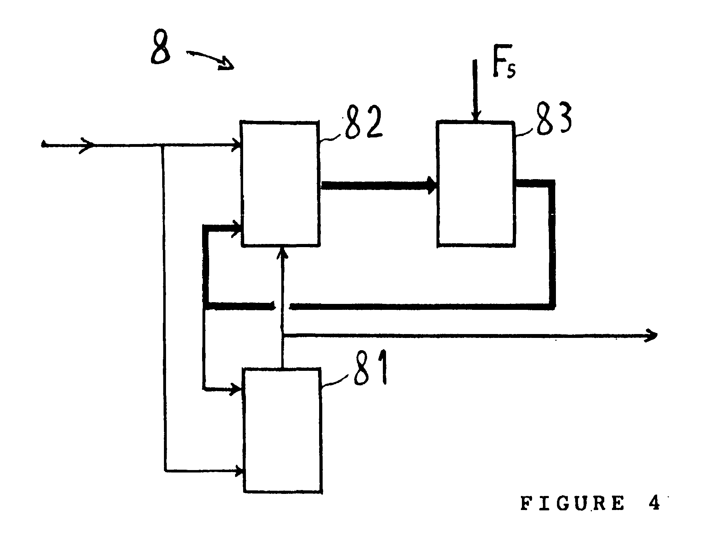

- la figure 4 illustre un circuit de détermination d'une valeur maximale dans une suite.

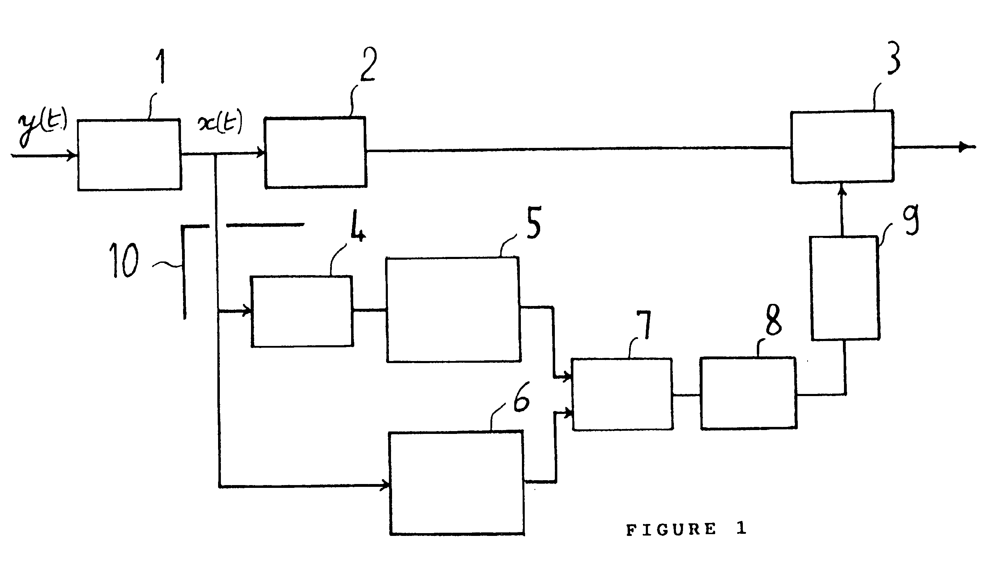

Le récepteur de la figure 1 appartient à une station tête de réseau d'un réseau de diffusion à la demande de programmes de télévision et comporte un étage d'entrée 1, de filtrage/démodulation d'un signal y(t), provenant d'un câble coaxial d'un réseau de transmission, pour lequel une explication plus détaillée est fournie plus loin. Le signal reçu y(t) correspond à une suite de requêtes d'abonnés, réparties dans des voies temporelles d'une trame TDMA, sélectionnant un programme particulier. Chaque requête est constituée d'un paquet R de symboles avec un préambule prédéterminé Pr de reconnaissance et synchronisation, de durée P. Lorsqu'un abonné veut transmettre une requête, il lui est alloué un intervalle de temps IT, ou voie temporelle, dans la trame temporelle se répétant cycliquement, l'intervalle de temps IT ayant une durée égale à celle d'un paquet R augmentée d'une marge M, ou intervalle de garde, pour tolérer des fluctuations de l'instant d'émission du paquet R et prendre en compte le temps de transmission.

L'étage d'entrée 1 fournit un signal x(t) filtré en bande de base à un circuit à retard 2, comme une ligne à retard, qui mémorise le signal sur une durée P + D et le restitue, avec le retard P + D, à un circuit 3 d'échantillonnage en lecture, commandé par un circuit base de temps 9 à déclenchement commandé. La durée D est celle d'une zone de données numériques Do, du paquet R, suivant ici le préambule Pr.

Le signal x(t) est par ailleurs appliqué en entrée d'un ensemble 10 de commande du circuit d'échantillonnage 3. Le signal x(t) y est appliqué, à travers un circuit 4 à retard D, à un bloc de calcul 5, calculant la corrélation entre le préambule prédéterminé Pr, et mémorisé localement, et une zone de début de signal reçu, pour y détecter le préambule Pr.

Un bloc de calcul 6 reçoit aussi, directement, le signal x(t) pour y déterminer la puissance du signal x(t) dans la zone Do.

Le circuit 4, à retard D, permet de caler les instants respectifs de fin du calcul de corrélation, de durée P, et du calcul de puissance, de durée D, qui est naturellement retardé de la durée P puisque les données de la zone concernée Do ne sont transmises qu'après le préambule Pr, donc avec un retard P.

Un additionneur 7 fournit la somme des résultats des blocs de calcul 5 et 6 à un circuit 8 de détection de maximum commandant le déclenchement de la base de temps 9. Les deux termes, ou flux, additionnés peuvent être pondérés l'un par rapport à l'autre en fonction des paramètres du système de transmission.

Le détail des opérations des circuits ci-dessus va maintenant être exposé.

Selon le procédé de l'invention, on effectue continûment un traitement de recherche de vraisemblance portant sur le bloc de signaux du paquet R, bloc comportant le préambule Pr et les données Do du reste du paquet R, on mémorise les signaux de données Do du bloc et, lorsqu'un maximum de vraisemblance est atteint, on lance un échantillonnage de lecture, au rythme déterminé F, des signaux de données Do déjà reçus et mémorisés et, le cas échéant, de ceux qui suivent.

Dans cet exemple, on élabore, dans le bloc 6, un flux de valeurs de puissance des données Do de début de paquet et, dans le bloc 5, un flux de valeurs de corrélation entre le préambule prédéterminé Pr et le préambule reçu, par un calcul continu des valeurs courantes considérées, le flux de valeurs de corrélation étant retardé de D pour l'additionner au flux de valeurs de puissance et ainsi obtenir une valeur de vraisemblance.

Comme indiqué plus haut, dans cet exemple les paquets, de durée déterminée, sont transmis, sans coordination entre eux, dans les intervalles de temps IT respectifs de la trame temporelle, intervalles de temps IT de durée correspondant à celle d'un paquet R augmentée de la marge M. On effectue une synchronisation spécifique à chaque intervalle de temps IT dans une fenêtre temporelle commençant au début de celui-ci et incluant la marge M, c'est-à-dire que l'on considère que le paquet R peut être calé en fin d'intervalle de temps, la marge M étant alors en totalité avant le paquet R.

La recherche d'un maximum dans le circuit 8 s'effectue continûment, c'est-à-dire que le signal x(t) s'écoule dans les divers circuits et il est analysé tout au long de cet écoulement. Pour un traitement numérique, les échantillons du signal x(t) sont quantifiés sur un nombre déterminé de bits, par exemple 10 bits.

Dans cet exemple, l'analyse est effectuée de façon numérique dans un microprocesseur DSP, ou un ASIC ou circuit logique programmable, si bien le signal x(t) est ici échantillonné, pour analyse, à une fréquence de suréchantillonnage Fs supérieure à sa fréquence F de transmission, par exemple K = huit fois cette fréquence F. Les huit échantillons prélevés sur une période T d'un symbole transmis représentent alors suffisamment fidèlement le signal reçu, une interpolation étant en outre possible. Les circuits à retard 2 et 4 peuvent donc être numériques, à base de mémoires intégrées. Il n'est d'ailleurs pas nécessaire que la fréquence de suréchantillonnage Fs soit un multiple entier de la fréquence d'émission des symboles, c'est-à-dire que l'ensemble 10 peut avoir une fréquence de fonctionnement autonome, seule la base de temps 9 étant liée à la fréquence d'émission F.

La détermination de corrélation du bloc 5 se conforme à l'équation suivante :

$$\left| \begin{array}{c} Lp \\ \sum \\ i = 1 \end{array} \quad S^*i. \; x(t + iT) \right|^2$$

avec

i :     rang du symbole dans le paquet, ici dans le préambule

$S^*_i$ :  représentation complexe conjuguée du motif de symboles de préambule prédéterminé.

Lp :  nombre de symboles du préambule, ici = 16.

t :     instant courant.

Comme exposé plus haut, il y a en fait huit fois plus d'étapes de calcul que ne le fait apparaître la formule ci-dessus, puisqu'il y a ici huit échantillons par symbole de durée T.

Le calcul de puissance dans le bloc 6 répond à l'équation :

$$\sum_{i = Lp + 1}^{L} \left| x(t + iT) \right|^2$$

avec

L (ici : 252) : nombre de symboles du préambule Pr et de la zone Do, ce calcul ne portant donc que sur cette zone.

On notera que les calculs des blocs 5 et 6 peuvent, en variante, porter sur des formules comme indiqué mais avec un exposant pouvant être autre que 2, et par exemple valant 1, les deux choix des valeurs d'exposant étant indépendants d'une formule à l'autre, mais de préférence égaux. De façon générale, toute fonction croissante en fonction du module de la variable convient.

L'intervalle 1 à L représente une fenêtre temporelle d'analyse du signal reçu x(t), fenêtre que traverse progressivement celui-ci à mesure que s'écoule le temps. En d'autres termes, la fenêtre d'analyse glisse dans une période de temps plus grande (M + L), dans laquelle est attendu le début d'un paquet.

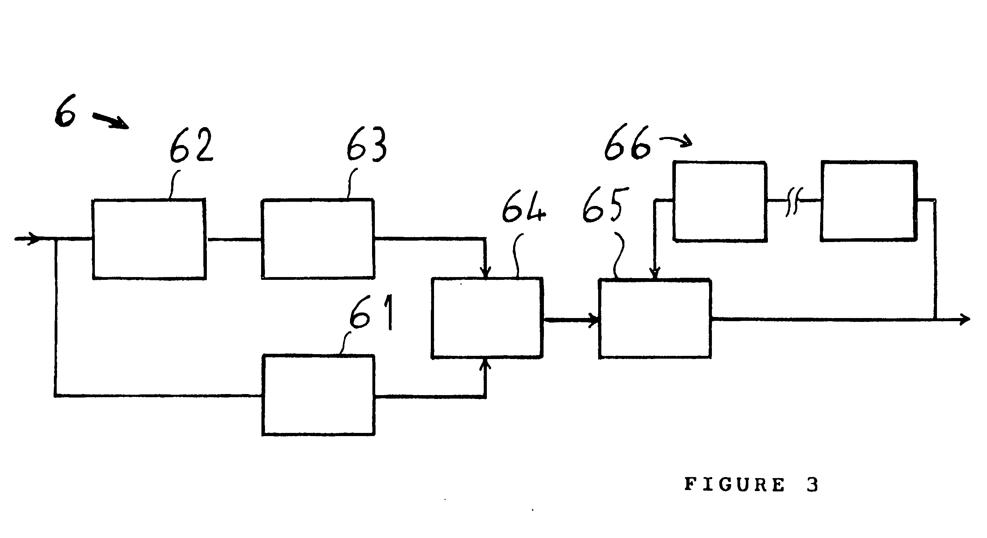

La figure 3 illustre la structure logique du bloc 6 de calcul de puissance. Comme il s'agit de calculer cycliquement, à la fréquence de suréchantillonnage Fs, une somme glissante sur une pluralité de termes, du genre

$$S_i = x_0 + x_1 + ... + X_{n-1}$$

puis, la fois suivante :

$$S_{i+1} = X_1 + ... + x_{n-1} + x_n$$

on calcule simplement

$$S_{i+1} = S_i - x_o + x_n$$

donc en deux opérations de correction de la valeur précédente $S_i$.

Ainsi, on calcule cycliquement la nouvelle valeur courante $S_{i+1}$ de puissance dans la fenêtre temporelle de taille déterminée L que traversent les signaux x(t), en mémorisant préalablement la valeur précédente Si et en la corrigeant en fonction de la différence $x_n - x_o$ des puissances des deux tronçons de signaux respectivement entrés et sortis de la fenêtre L, d'un calcul au suivant.

A cet effet, le signal entrant est appliqué à un bloc de calcul 61 effectuant l'addition ci-dessus ($S_i$) et est aussi appliqué, à travers un circuit 62 à retard correspondant à la fenêtre d'analyse, à un bloc de calcul 63 semblable au bloc 61. Un soustracteur 64, alimenté par les circuits 61 et 63, fournit la valeur $x_n - x_o$ à un additionneur 65 dont la sortie, qui est celle du bloc 6, est rebouclée en entrée à travers une rangée de K = huit registres à décalage 66 avançant à la fréquence de suréchantillonnage Fs, correspondant donc à un retard total d'une période T de symbole. Les huit registres 66 permettent d'entrelacer temporellement K = huit séries de calculs, portant chacune sur une phase spécifique du signal analysé dans la période T. Ainsi, on effectue les calculs de puissance par pas à la fréquence de suréchantillonnage Fs multiple (K) du rythme de transmission F, en affectant cycliquement, à chaque calcul, une tranche temporelle dans la période du rythme T, et on restitue la valeur précédente $S_i$ en la retardant d'un nombre de pas égal au multiple K et représentant au total la période T. Ainsi, l'additionneur 65 reçoit, pour calculer $S_{i+1}$, le signal $S_i$ retardé de T et la correction $x_n - x_o$ voulue.

Dans le circuit 8, on détecte le maximum de vraisemblance par des comparaisons cycliques entre la valeur actuelle et la valeur précédente de la vraisemblance fournie par l'additionneur 7, pour à chaque fois sélectionner la valeur la plus élevée et la mémoriser, et on détecte le maximum par le fait que la valeur précédente est à nouveau sélectionnée.

Plus précisément, le détecteur 8 de maximum, ou crête, comporte un comparateur d'entrée 81 et un multiplexeur 82 à deux voies recevant tous deux, à la fréquence de suréchantillonnage Fs, le nouveau résultat de l'additionneur 7 et le résultat précédent provenant d'un circuit à retard 83, à retard égal à la période de la fréquence de suréchantillonnage Fs, soit ici T/8.

La sortie du comparateur 81 commande l'aiguillage du multiplexeur 82 pour appliquer, à l'entrée du circuit à retard 83, le nouveau résultat, actuel, tant que croît le signal analysé provenant de l'additionneur 7, et, sinon, le comparateur 81 change d'état pour confirmer l'ancien résultat.

Le circuit 83 pourrait être un registre tampon à mémorisation commandée par une horloge à fréquence Fs, auquel cas le multiplexeur 82 pourrait être remplacé par une porte de verrouillage de l'horloge, le signal d'entrée issu de l'additionneur 7 parvenant directement à l'entrée de donnée du registre. Les circuits ci-dessus peuvent au besoin traiter des nombres de plus de dix bits, si la précision voulue le requiert.

Un maximum est alors détecté lorsque le maximum provisoire mémorisé (83) est rebouclé (82) une première fois (trait renforcé), la sortie du comparateur 81 indiquant un refus du signal actuel et donc un instant de début de retombée du signal somme, permettant de lancer la base de temps 9. La recherche de maximum est ici poursuivie sur toute la fenêtre de temps afin d'obtenir le maximum global. En l'absence de signaux utiles, on élimine des maximas parasites, dus à du bruit, grâce au fait qu'ils ne dépassent pas un seuil minimum. Comme le signal reçu x(t) est temporairement mémorisé dans le circuit à retard 2, cette mémorisation autorise, sans perte du signal reçu, la prolongation de l'analyse dans l'ensemble 10 au-delà de l'instant auquel est détecté un (premier) maximum. Pour délimiter au mieux le maximum global, on peut prévoir d'effectuer la recherche du maximum de vraisemblance sur la totalité du paquet et éventuellement au-delà, c'est-à-dire que la zone Do représente alors la totalité du paquet, hormis le préambule Pr, avec, en fin, un éventuel tronçon final exempt de signaux.

On élabore ainsi le maximum de vraisemblance à partir des suréchantillons dont le flux contient, sous-jacentes, les informations de rythme des symboles et de position du premier symbole à détecter, informations qui sont utilisées simultanément et non pas séquentiellement comme dans l'art antérieur mentionné au début. L'obtention du maximum de vraisemblance fournit alors, en une étape continue globale, simultanément, sous forme explicite, ici numérique, la phase symbole et la position du premier signal utile à échantillonner. Ainsi, on déduit directement, d'après l'instant auquel se produit le maximum de vraisemblance, à la fois la phase des signaux reçus au dit rythme et la position temporelle des données dans ceux-ci.

La base de temps 9 comporte un oscillateur à période nettement inférieur à T, par exemple de fréquence Fs, mais alors multiple entier de la fréquence F d'émission des symboles de x(t).

Lorsque le circuit 8 commande le lancement de la base de temps 9, un compteur de celle-ci, recevant l'horloge à fréquence Fs, est alors libéré et compte ici sur un cycle de huit temps, de 0 à 7, donc sur une durée T. L'état "0" étant ici de durée indéterminée, compte tenu du temps de calcul dans le circuit 8 et de l'absence éventuelle de synchronisation de l'horloge de la base de temps 9 sur les circuits de calcul et de suréchantillonnage 5 et 6, c'est l'état "1" qui est décodé pour fournir une impulsion de commande d'échantillonnage au circuit 3.

Dans le présent exemple, on mémorise la valeur instantanée alors présente en sortie du circuit à retard 2, c'est-à-dire que le circuit 3 est ici un registre à décalage à entrée d'horloge reliée à la sortie d'un décodeur de l'état "1" du compteur de la base de temps 9.

Dans le cas où le circuit à retard 2 serait réalisé sous forme d'une mémoire RAM gérée en anneau FIFO à fréquence Fs, ayant au moins la capacité pour le retard voulu, il faudrait alors l'adresser pour choisir le retard symbole voulu (position du premier symbole puis des suivants) et plus précisément choisir celui des huit suréchantillons ayant, dans la période T, la phase optimale pour lire le symbole, c'est-à-dire un suréchantillon de niveau représentant parfaitement le symbole émis.

Dans tous les cas, le signal x(t) est mémorisé, sous forme analogique ou sous forme numérique après numérisation par un suréchantillonnage permettant d'en restituer la forme. On stocke donc la forme totale, continue, du signal x(t) reçu, sans chercher à y détecter les symboles transmis à fréquence F, et ce n'est qu'après les traitements ci-dessus qu'on effectue l'échantillonnage correspondant à la fréquence F. Comme le signal x(t) est mémorisé, le temps ne joue plus directement et on conçoit que la notion d'échantillonnage à fréquence F englobe alors la notion d'échantillonnage spatial dans la mémoire, parmi les suréchantillons, à un moment quelconque par rapport au reste des données du paquet R, qui, au choix, peuvent être échantillonnées à mesure qu'elles arrivent du circuit 1, sans retard (2).

Dans un cas où chaque symbole serait représenté par un signal évolutif non en bande de base, il conviendrait alors de repérer dans le circuit 2, d'après la commande de la base de temps 9, les huit suréchantillons de chaque symbole pour les transmettre groupés au circuit d'échantillonnage 3, à fin d'analyse, par démodulation pour reconnaître le symbole.

**Revendications**

1.  Procédé de synchronisation d'un récepteur de signaux de données numériques transmis, à un rythme déterminé (F), par paquets (R) de données précédées d'un préambule prédéterminé (Pr), dans lequel on effectue continûment un traitement de recherche de vraisemblance portant sur un bloc de signaux, comportant le préambule (Pr) et des données (Do) du reste du paquet (R), on mémorise (2) les signaux reçus et, lorsqu'un maximum de vraisemblance est atteint (8), on lance un échantillonnage de lecture (9), au rythme déterminé (F), des signaux de données déjà reçus et mémorisés (Do).

2.  Procédé selon la revendication 1, dans lequel on déduit directement, d'après l'instant auquel est atteint le maximum de vraisemblance, à la fois la phase des signaux reçus au dit rythme et la position temporelle des données dans ceux-ci.

3.  Procédé selon l'une des revendications 1 et 2, dans lequel on élabore (6) un flux de valeurs de puissance des données (Do) de début de paquet et un flux de valeurs de corrélation entre le préambule prédéterminé (Pr) et le préambule reçu, par un calcul continu des valeurs courantes considérées, et on retarde (4) le flux de valeurs de corrélation (5) pour l'additionner au flux de valeurs de puissance (6) et ainsi obtenir une valeur de vraisemblance.

4.  Procédé selon l'une des revendications 1 à 3, dans lequel, les paquets, de durée déterminée, étant transmis dans des intervalles de temps respectifs (IT), d'une trame temporelle, de durée correspondant à celle d'un paquet augmentée d'une marge (M), on effectue une synchronisation spécifique à chaque intervalle de temps (IT) dans une fenêtre temporelle commençant au début de celui-ci et incluant ladite marge (M).

5. Procédé selon l'une des revendications 1 à 4, dans lequel on effectue la recherche de vraisemblance en prélevant, sur les signaux reçus, des échantillons pour la recherche de vraisemblance, à un rythme (Fs) supérieur au rythme de transmission F.

6. Procédé selon l'une des revendications 3 à 5, dans lequel on calcule cycliquement une nouvelle valeur courante de puissance $(S_{i+1})$, dans une fenêtre temporelle de taille déterminée (L) que traversent les signaux, en mémorisant préalablement une valeur précédente $(S_i)$ et en la corrigeant en fonction de la différence $(x_n - x_o)$ des puissances des deux tronçons de signaux respectivement entrés et sortis de la fenêtre (L), d'un calcul au suivant.

7. Procédé selon la revendication 6, dans lequel on effectue les calculs à une fréquence de suréchantillonnage (Fs) multiple (K) du rythme de transmission (F), en affectant cycliquement, à chaque calcul, une tranche de temporelle dans la période (T) dudit rythme et on restitue la valeur précédente $(S_i)$ en la retardant d'un nombre de pas égal audit multiple (K) et représentant au total ladite période (T).

8. Procédé selon l'une des revendications 3 à 7, dans lequel on détecte le maximum de vraisemblance par comparaisons cycliques (81) entre une valeur actuelle et une valeur précédente de la vraisemblance, pour à chaque fois sélectionner (82) la valeur la plus élevée et la mémoriser (83), et on détecte le maximum par le fait que la valeur précédente est à nouveau sélectionnée.

9. Procédé selon l'une des revendications 3 à 8, dans lequel on pondère, l'un par rapport à l'autre, les deux flux avant de les additionner.

**Patentansprüche**

1. Verfahren zum Synchronisieren eines Empfängers für digitale Datensignale, die mit einem bestimmten Takt (F) über Datenpakete (R), denen ein vorbestimmtes Dateianfangs-Etikett (Pr) vorausgeht, übertragen werden, wobei kontinuierlich eine Wahrscheinlichkeitsermittlungsverarbeitung durchgeführt wird, die sich auf einen Signalblock auswirkt, der das Dateianfangs-Etikett (Pr) und Daten (Do) des restlichen Pakets (R) umfasst, die empfangenen Signale gespeichert werden (2), und wenn die Höchstwahrscheinlichkeit erreicht ist (8), eine Leseabtastung (9) der bereits empfangenen und gespeicherten Datensignale (Do) mit dem vorbestimmten Takt (F) anläuft.

2. Verfahren nach Anspruch 1, wobei, je nach dem Zeitpunkt, zu dem die Höchstwahrscheinlichkeit erreicht ist, gleichzeitig die Phase der mit diesem Takt empfangenen Signale und die zeitliche Lage der Daten in diesen Signalen abgeleitet wird.

3. Verfahren nach einem der Ansprüche 1 und 2, wobei ein Leistungswertefluss der Daten (Do) des Paketanfangs und ein Wertefluss der Korrelation zwischen dem vorbestimmten Dateianfangs-Etikett (Pr) und dem empfangenen Dateianfangs-Etikett durch eine kontinuierliche Berechnung der berücksichtigten momentanen Werte erstellt wird (6), und der Korrelationswertefluss (5) verzögert wird (4), um ihn zum Leistungswertefluss zu addieren (6) und somit einen Wahrscheinlichkeitswert zu erhalten.

4. Verfahren nach einem der Ansprüche 1 bis 3, bei dem, wobei die Pakete mit einer vorbestimmten Dauer, die in jeweiligen Zeitintervallen (IT) eines Zeitrasters übertragen werden, dessen Dauer derjenigen eines um eine Spanne (M) erhöhten Pakets entspricht, eine spezifische Synchronisation bei jedem Zeitintervall (IT) in einem Zeitfenster durchgeführt wird, die am Anfang dieses Zeitintervalls beginnt und die Spanne (M) einschließt.

5. Verfahren nach einem der Ansprüche 1 bis 4, wobei die Wahrscheinlichkeitsermittlung **dadurch** durchgeführt wird, dass an den empfangenen Signalen mit einem Takt (Fs), der höher ist als der Übertragungstakt (F), zur Wahrscheinlichkeitsermittlung Abtastungen vorgenommen werden.

6. Verfahren nach einem der Ansprüche 3 bis 5, wobei zyklisch ein neuer momentaner Leistungswert $(S_{i+1})$ in einem Zeitfenster mit einer vorbestimmten Größe (L), das die Signale durchlaufen, berechnet wird, indem zuvor ein vorhergehender Wert $(S_i)$ gespeichert und in Abhängigkeit von der Differenz $(x_n - x_n)$ der Leistungen der beiden Signalabschnitte, die jeweils in das Fenster (L) ein- bzw. daraus ausgetreten sind, von einer Berechnung zur nächsten berichtigt wird.

7. Verfahren nach Anspruch 6, wobei die Berechnungen mit einer Überabtastungsfrequenz (Fs) durchgeführt werden, die ein Mehrfaches (K) des Übertragungstakts (F) beträgt, indem jeder Berechnung zyklisch ein Zeitteilabschnitt in der Periode (T) des Takts zugewiesen wird und der vorhergehende Wert $(S_i)$ rekonstruiert wird, indem er um eine Anzahl von Schritten verzögert wird, die gleich dem Mehrfachen (K) entspricht, und die Periode (T) insgesamt dargestellt wird.

8. Verfahren nach einem der Ansprüche 3 bis 7, wobei die Höchstwahrscheinlichkeit durch zyklische Vergleiche (81) zwischen einem aktuellen und einem vorhergehenden Wert der Wahrscheinlichkeit erfasst wird, um jedes Mal den höchsten Wert auszuwählen (82) und abzuspeichern (83), und die Höchstwahrscheinlichkeit **dadurch** erfasst wird, dass der vorhergehende Wert erneut ausgewählt wird.

9. Verfahren nach einem der Ansprüche 3 bis 8, wobei die beiden Flüsse gegeneinander abgewogen werden, bevor sie addiert werden.

**Claims**

1. Process for synchronising a receiver of digital data signals transmitted at a particular rate (F), in packets (R) of data preceded by a predetermined foreword (Pr), wherein probability search processing is continuously carried out relating to a block of signals, containing the foreword (Pr) and data (Do) concerning the rest of the packet (R), the signals received are memorised (2) and, when maximum probability is reached (8), a reading sample (9) is launched, at the particular rate (F), of the data signals already received and memorised (Do).

2. Process according to Claim 1 whereby, from the moment at which the maximum probability is reached, there is deduced directly both the phase of the signals received at the said rate and the time position of the data in them.

3. Process according to one of the Claims 1 and 2, whereby there is worked out (6) a flow of power values for the data (Do) for the start of the packet and a flow of figures for correlation between the predetermined foreword (Pr) and the foreword received, through a continuous calculation of the current figures considered, and the flow of correlation figures (5) is delayed (4) in order to add it to the flow of power values (6) and thus find a probability value.

4. Process according to one of the Claims 1 to 3 whereby, with the packets of a particular duration, being transmitted in the respective intervals of time (IT), from a time frame, for a duration corresponding to that of one packet increased by a margin (M), synchronisation is made specific to each interval of time (IT) in a time window beginning at the start of it and including the said margin (M).

5. Process according to one of the Claims 1 to 4, whereby the probability search is carried out by taking, out of the signals received, samples for the probability search, at a rate (Fs) higher than the rate of transmission (F).

6. Process according to one of the Claims 3 to 5, whereby a new current power value ($S_{i+1}$) is cyclically calculated, in a time window of a particular size (L) which the signals go through, while previously memorising a previous value ($S_i$) and correcting it as a function of the difference ($x_n - x_o$) of the powers of the two sections of signals entered and exited respectively in the window (L), from one calculation to the next.

7. Process according to Claim 6, whereby the calculations are made at an oversampling frequency (Fs), multiple (K) of the rate of transmission (F), by cyclically allocating, to each calculation, a time section in the period (T) of the said rate and the preceding value ($S_i$) is restored by delaying it by a number of steps equal to the said multiple (K) and representing in total the said period (T).

8. Process according to one of the Claims 3 to 7, whereby the maximum probability is detected by cyclic comparisons (81) between a current value and a preceding value of the probability in order, each time, to select (82) the highest figure and memorise (83) it, and the maximum is detected by the fact that the preceding figure is again selected.

9. Process according to one of the Claims 3 to 8, whereby the two flows are weighted, one in relation to the other, before adding them up.

FIGURE 1

FIGURE 2

FIGURE 3

FIGURE 4